Europäisches Patentamt

European Patent Office

Office européen des brevets

(11) Publication number: **0 210 762**
**A1**

## (12) EUROPEAN PATENT APPLICATION

(21) Application number: 86305131.4

(51) Int. Cl.⁴: **B60S 1/36**

(22) Date of filing: 02.07.86

(30) Priority: 24.07.85 GB 8518723

(43) Date of publication of application:
04.02.87 Bulletin 87/06

(84) Designated Contracting States:
AT BE CH DE FR GB IT LI LU NL SE

(71) Applicant: **JAGUAR CARS LIMITED**
**Browns Lane**
**Allesley Coventry CV5 9DR West**
**Midlands(GB)**

(72) Inventor: **Cragg-Sapsford, Ian**
**57 Rosslyn Avenue**
**Coundon Coventry CV6 1GL(GB)**

(74) Representative: **Cundy, Anthony Brian**
**Anthony Cundy & Company 384 Station**
**Road Dorridge**
**Solihull West Midlands B93 8ES(GB)**

(54) Windscreen Wipers.

(57) A windscreen wiper mechanism includes a wiper arm (10) having a second member (18) mounted on a first member (11), so that it is movable axially with respect thereto. The first member (11) is adapted to be mounted so that it may be driven in reciprocating manner about a pivot. Electromagnetic means (11) acts between the first and second members (11,18) and is controlled to extend and retract the arm (10) in response to the arcuate position of the wiper arm (10).

FIG. 1.

EP 0 210 762 A1

## WINDSCREEN WIPERS

The present invention relates to windscreen wipers for vehicles and in particular to windscreen wipers of the kind in which a wiper blade is mounted upon an arm for reciprocal pivotal movement over the windscreen.

With simple wiper mechanisms of this type, the wiper blade sweeps an arcuate path over the windscreen which provides limited coverage of the windscreen. Such wipers are normally used in pairs, the arcuate paths of which overlap to provide adequate coverage of the windscreen. With the shape of windscreens on modern vehicles and also to reduce the complexity of the drive mechanism, there has been a tendency on modern vehicles to adopt single wiper systems. However, in order to improve the area of the windscreen covered by such systems, it has been proposed to modify the arcuate path of the wiper blade by extending the arm axially as it pivots. However, in the systems proposed hitherto, a separate drive means with associated transmission from the vehicle to the wiper arm or a complex mechanical linkage has been required, in order to provide axial movement of the arm.

According to one aspect of the present invention, a windscreen wiper mechanism comprises; a wiper arm including first and second members mounted with respect to one another so as to permit axial movement of one member relative to the other to vary the length of the arm, mounting means being provided on said first member by means of which the arm may be secured to a pivot about which it may be driven in reciprocating manner and means being provided on said second member by means of which a wiper blade may be attached thereto; electromagnetic means mounted upon the arm and acting between the first and second members to control axial movement of the second member relative to the first member and control means responsive to the arcuate position of the wiper arm, to energise the electromagnetic means to extend or contract the wiper arm.

Preferably the electromagnetic means comprises a linear electric motor. The linear motor may be mounted on the first member and the second member attached to the motor shaft. Alternatively, a rotary electric motor may be used to drive a linear actuator, for example, a stepping motor may be used to rotate an axially fixed screw-threaded member so as to cause linear movement of a non-rotational correspondingly threaded member. In a further alternative, the electromagnetic means may comprise a solenoid actuator, the force exerted on the solenoid core being balanced against spring means, so that the energising current may be varied to vary the force on the core and hence the deformation of the spring means and axial movement of the core.

The control means includes means for sensing the arcuate position of the wiper arm. Such means may include resistive, capacitive and/or inductive means variable in response to rotation of the wiper arm to produce a signal corresponding to the degree of rotation of the wiper arm from a given starting point. Alternatively, sensors may be used to produce signals when the wiper arm reaches specific points in its arcuate path. Such sensors may be inductive, magnetic or optical.

The signal corresponding to the arcuate position of the wiper arm is used to produce an energising signal for the electromagnetic means, so that the length of the wiper arm and hence the area of windscreen swept by the wiper blade, may be varied as desired.

An embodiment of the invention is now described, by way of example only, with reference to the accompanying drawings, in which:-

Figure I illustrates in sectional side elevation, part of a windscreen wiper mechanism in accordance with the present invention; and

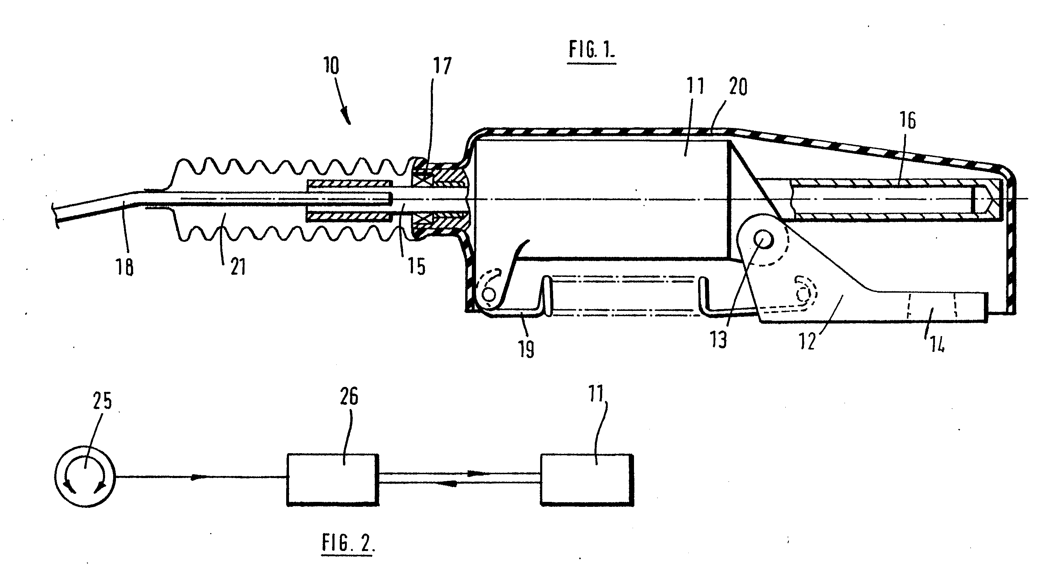

Figure 2 is a block diagram of an electrical control system suitable for the mechanism illustrated in Figure I.

Figure I illustrates a windscreen wiper arm I0, in which a linear motor II is mounted on a mounting block I2, by means of a trunnion bearing I3. A hole I4 is provided in the mounting block I2 for attachment to the drive shaft of a conventional windscreen wiper drive system (not shown), by means of which the arm I0 may be driven for reciprocating pivotal movement about the axis of the shaft.

The linear motor II has a shaft I5 which is mounted for linear movement with respect to the motor II, in a sleeve formation I6 extending coaxially of the shaft I5 from the end of the motor II adjacent the mounting block I2 and a bearing I7 at the other end of the motor II. An elongate extension I8 is attached to the end of the shaft I5 emerging from the bearing I7, said elongate extension being provided at its free end with means for the attachment of a wiper blade (not shown).

The trunnion bearing I3 permits the linear motor II and extension I8 with wiper blade attached, to be pivotted away from the windscreen, for maintenance purposes etc. A spring I9 is provided between the linear motor II and the mounting block I2, to hold the arm I0 and wiper blade down against the windscreen.

A hinge cover 20 is provided over the linear motor II and a flexible rubber bellows 2I is attached between the extension I8 and the linear motor II, to prevent ingress of moisture and dirt into the linear motor II.

As illustrated in Figure 2, a control means for the windscreen wiper mechanism described above comprises; a rotary positional sensor 25 which produces a signal corresponding to the arcuate position of the wiper arm I0. The signal from the sensor 25 is fed to a control unit 26 which is programmed to apply energising signals to the linear motor II corresponding to the arcuate position of the wiper arm I0, to cause the linear motor II to extend or contract the wiper arm and thus produce the desired wiper pattern. Sensing means (not shown) may also be provided on the wiper arm I0 to sense the extension thereof and provide a feedback to the control unit 26 for correction purposes.

Electrical connection between a control unit 26 and the linear motor II may be made by means of a flexible cable or by means of rotary contacts associated with the drive shaft.

A secondary fixed wiper blade may be provided on the wiper arm I0 to cover the area of the inner part of the sweep which would otherwise be missed by the main wiper blade, as the arm I0 is extended. Alternatively, the control unit 26 may be programmed to produce varying wiper patterns on successive cycles so that portions of the windscreen missed on one cycle will be swept on a subsequent cycle.

It will also be appreciated that more than one windscreen wiper assembly can be utilised, two or more extensible wiper arms being utilised on a single screen controlled by a common or individual control means. Indeed, front/rear screen wiping can be centrally or individually controlled where required in accordance with the present invention.

Moreover, means can be provided to vary the sweep speed in phase with the arcuate position of the blade, in order to take account of weather conditions or to take into account the need to avoid overloading of the drive means when, for example, the arm I0 is fully extended at which stage the wiper driving torque is very high. Any combination of speeds and speed variations can be incorporated into the wiper operation in accordance with the present invention.

## Claims

I. A windscreen wiper mechanism comprising a wiper arm (I0) including first and second members (II, I8) mounted with respect to one another so as to permit axial movement of one member (I8) relative to the other member (II) to vary the length of the arm (I0), mounting means (I2) being provided on said first member (II) by means of which the arm (I0) may be secured to a pivot about which it may be driven in reciprocating manner and means being provided on said second member by means of which a wiper blade may be attached thereto; characterised in that electromagnetic means (II) mounted upon the arm (I0) and acting between the first and second members (II, I8) to control axial movement of the second member (I8) relative to the first member (II) and control means (26) responsive to the arcuate position of the wiper arm - (I0), to energise the electromagnetic means (II) to extend or contract the wiper arm (I0).

2. A windscreen wiper mechanism according to claim I characterised in that the electromagnetic means (II) is a linear electric motor.

3. A windscreen wiper mechanism according to claim I characterised in that the electromagnetic means (II) is a rotary electric motor, said rotary electric motor being arranged to drive a linear actuator.

4. A windscreen wiper mechanism according to claim 3 characterised in that the linear actuator comprises a first screw threaded member which is fixed axially and is adapted to be rotated by the rotary electric motor and a second non-rotational correspondingly threaded member which engages said first screw threaded member so that upon rotation of said first screw threaded member the second screw threaded member will move axially.

5. A windscreen wiper mechanism according to claim I characterised in that the electromagnetic means (II) is a solenoid actuator, the stroke of which varies with the energising current.

6. A windscreen wiper mechanism according to any one of the preceding claims characterised in that the control means (26) includes means for sensing (25) the arcuate position of the wiper arm - (I0).

7. A windscreen wiper mechanism according to claim 6 characterised in that a sensor (25) is associated with the wiper arm (I0), said sensor (25) producing a signal corresponding to the degree of rotation of the wiper arm (I0) from a given point.

8. A windscreen wiper mechanism according to claim 6 characterised in that a sensor (25) is associated with the wiper arm (I0), said sensor (25) detecting when the wiper arm (I0) reaches a specific point in its arcuate path.

9. A windscreen wiper mechanism according to any of the preceding claims characterised in that means is associated with the arm (I0) for sensing extension thereof and producing a feedback signal to the control means (26), for correction purposes.

I0. A windscreen wiper mechanism according to any one of the preceding claims characterised in that a secondary fixed wiper blade is mounted upon the first member (II) to cover the area of the windscreen which would otherwise be missed by the main wiper blade as the wiper arm (I0) is extended.

II. A windscreen wiper mechanism according to any one of the preceding claims characterised in that the control means (26) is programmed to produce a varying wipe pattern on successive cycles, so that portions of the windscreen missed on one cycle will be swept on a subsequent cycle.

I2. A windscreen wiper mechanism according to any one of the preceding claims characterised in that two or more extensible wiper arms (I0) are controlled by a common control means (26).

I3. A windscreen wiper mechanism according to any of the preceding claims characterised in that the control means (26) also controls the speed of arcuate movement of the wiper arm (I0).

FIG. 1.

FIG. 2.

0 210 762

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 301 379 (DEVASSE) <br><br> * Whole document * | 1,2,6, 8 | B 60 S 1/36 |
| Y | | 3,5,10 ,12 | |
| | --- | | |
| Y | FR-A-1 561 319 (LAMBERT) <br> * Page 2, left-hand column, lines 30-38, right-hand column, line 61 - page 3, left-hand column, line 17; figures 1,4 * | 5 | |
| A | | 1,2 | |
| | --- | | |
| Y | DE-A-2 364 427 (BOSCH) <br> * Page 7, line 23 - page 8, line 10 and line 32 - page 9, line 29; page 11, line 20 - page 12, line 9; figures 1,6,7 * | 3 | TECHNICAL FIELDS SEARCHED (Int. Cl.4) <br><br> B 60 S |
| A | | 1 | |
| | --- | | |
| Y | DE-A-2 023 860 (S.W.F.) <br> * Whole document * | 10,12 | |
| A | | 1 | |
| | ---    -/- | | |

The present search report has been drawn up for all claims

| Place of search | Date of completion of the search | Examiner |
|---|---|---|
| THE HAGUE | 04-11-1986 | VERLEYE J. |

## DOCUMENTS CONSIDERED TO BE RELEVANT

Page 2

| Category | Citation of document with indication. where appropriate, of relevant passages | Relevant to claim | CLASSIFICATION OF THE APPLICATION (Int. Cl.4) |
|---|---|---|---|
| Y | DE-A-3 220 501 (DAIMLER-BENZ) <br> * Page 3, line 21 - page 4, line 10; figures 1,2 * | 10 | |
| A | | 1 | |
| | --- | | |
| A | DE-A-3 143 664 (RUEDIGER) <br> * Page 16, line 15 - page 17, line 12; figure 1 * | 4 | |
| | --- | | |
| P,Y | DE-C-3 405 131 (DAIMLER-BENZ) <br> * Column 2, lines 22-62; figures 1,2 * | 3,10 | |
| P,A | | 1 | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 04-11-1986 | VERLEYE J. |